# EUROPEAN PATENT APPLICATION

(11) **EP 3 537 391 A1**
(43) Date of publication of application: **11.09.2019**
(21) Application number: 19160502.1
(22) Date of filing: 04.03.2019
(51) Int. Cl.: G07G 1/00, G06Q 20/38, G07G 1/14, G06Q 30/02

(54) **SALES DATA PROCESSING APPARATUS AND SALES DATA PROCESSING METHOD**

(30) Priority: 05.03.2018 JP 2018038293
(71) Applicant: Toshiba Tec Kabushiki Kaisha, 141-8562 Tokyo (JP)
(72) Inventor: Iizaka, Hitoshi, Tokyo, 141-8562 (JP); Naito, Hidehiro, Tokyo, 141-8562 (JP); Miyakoshi, Hidehiko, Tokyo, 141-8562 (JP); Kawaguchi, Yuki, Tokyo, 141-8562 (JP); Ogomori, Naoki, Tokyo, 141-8562 (JP)
(74) Representative: Hoffmann Eitle

(57) **Abstract**

A sales data processing terminal for a retail location, includes an image capturing device to capture an image of an item being registered in a sales transaction or a gift certificate presented for settlement of the sales transaction. A controller is configured to identify the item in the image by comparing the image to stored commodity reference information for items for sale at the retail location, and
identify whether the gift certificate is a type accepted at the retail location for settlement by comparing the gift certificate in the image to stored gift certificate reference information.

## Description

### CROSS-REFERENCE TO RELATED APPLICATION

This application is based upon and claims the benefit of priority from Japanese Patent Application No. 2018-038293, filed in March 5, 2018, the entire contents of which are incorporated herein by reference.

### FIELD

Embodiments described herein relate generally to a sales data processing apparatus and a sales data processing method.

### BACKGROUND

In the related art, various types of gift certificates are known and available. However, certain gift certificates may not be permitted for settlement purposes depending on the store. Although it may not be possible to use a particular gift certificate for settlement at a particular store, it is often difficult for store clerks to reliably distinguish the acceptable from the unacceptable gift certificates when presented by a customer. For that reason, it would be preferable to make it easier to determine whether a gift certificate presented by a customer is acceptable at the store.

With a conventional self-service checkout apparatus operated by a customer, each time a customer tries to use a gift certificate for settlement, a store clerk must go to the self-service checkout apparatus and manually check the gift certificate. For that reason, even when the presented gift certificate cannot be accepted at the store, the customer must still wait for the store clerk to arrive and confirm (or not) the gift certificate.

### SUMMARY OF THE INVENTION

One of the objects of the present invention is to improve prior art techniques and overcome at least some of the prior art problems as for instance above illustrated.

According to a first aspect of the invention, it is provided a sales data processing terminal for a retail location, comprising an image capturing device to capture an image of an item being registered in a sales transaction or a gift certificate presented for settlement of the sales transaction; and a controller configured to identify the item in the image being registered by comparing the image to stored commodity reference information for a plurality of items for sale at the retail location, and to identify whether the gift certificate is a type accepted at the retail location for settlement of the sales transaction by comparing the gift certificate in the image to stored gift certificate reference information for a plurality of gift certificate types.

Optionally, in the sales data processing terminal according to the first aspect of the invention, the controller is further configured to display a candidate match for the gift certificate on a display screen, the candidate match being identified from the stored gift certificate reference information according to a calculated similarity value obtained by generic object recognition processing.

Optionally, the sales data processing terminal according to the first aspect of the invention further comprises a display screen connected to the controller, wherein the controller is further configured to display a candidate match for the gift certificate on the display screen, the candidate match being identified from the stored gift certificate reference information according to a calculated similarity value obtained by generic object recognition processing.

Optionally, in the sales data processing terminal according to the first aspect of the invention, the controller uses generic object recognition to identify the item in the image being registered.

Optionally, in the sales data processing terminal according to the first aspect of the invention, the controller uses generic object recognition to identify whether the gift certificate is the type accepted at the retail location for settlement of the sales transaction.

Optionally, in the sales data processing terminal according to the first aspect of the invention, the stored commodity reference information is in a first dictionary of a PLU file and the stored gift certificate reference information is in a second dictionary of the PLU file.

Optionally, the sales data processing terminal according to the first aspect of the invention further comprises a storage device storing the stored commodity reference information and the stored gift certificate reference information.

Optionally, the sales data processing terminal according to the first aspect of the invention further comprises a display screen; and an operator input unit, wherein when the gift certificate in the image is identified by the controller as the type accepted at the retail location, the controller causes the display screen to display a plurality of options for a face value of the gift certificate and the face value of the gift certificate used in settlement of the sales transaction is set by a selection of one of the plurality of options made via the operator input unit.

Optionally, in the sales data processing terminal according to the first aspect of the invention, the controller is further configured to cause a display screen to display a notification that the gift certificate is not accepted for settlement of the sales transaction if the gift certificate in the image is not identified as the type accepted at the retail location for settlement.

According to a second aspect of the invention, it is provided a checkout apparatus, comprising an image capturing device that captures an image of an article and outputs a captured image; a storage unit that stores first reference information for recognizing an item in a sales transaction and second reference information for recognizing a gift certificate presented for settlement of the sales transaction; and a controller configured to: identify the article in the captured image by comparing the captured image to the first reference information or the second reference information, register the item in the sales transaction when the article in the captured image is identified using the first reference item as a particular item in the sale transaction, determine whether or not the gift certificate is a type accepted at the retail location for settlement of the sales transaction using the second reference information when the article in the captured image is identified as a gift certificate, and display a notification on a display screen indicating the gift certificate is not the type accepted at the retail location for settlement when it is determined the gift certificate is not the type accepted at the retail location.

Optionally, in the checkout apparatus according to the second aspect of the invention, the controller is further configured to: send a notification to an attendant terminal indicating the gift certificate has been presented for settlement and is the type accepted at the retail location for settlement, and delay settlement processing until a response from the attendant terminal is received confirming authenticity of the gift certificate and providing a face value for the gift certificate.

Optionally, in the checkout apparatus according to the second aspect of the invention, the controller is further configured to complete settlement processing using the face value for the gift certificate provided in the response from the attendant terminal.

Optionally, the checkout apparatus according to the second aspect of the invention further comprises a display screen; and an operator input unit, wherein the controller is further configured to: cause the display screen to display a plurality of options for a face value of the gift certificate when the gift certificate in the captured image is identified as the type accepted at the retail location, receive a user selection of the face value from the plurality of options; send a notification to an attendant terminal indicating the gift certificate has been presented for settlement and the face value according to the user selection, delay settlement processing until a response from the attendant terminal is received confirming authenticity of the gift certificate and the face value.

Optionally, in the checkout apparatus according to the second aspect of the invention, the controller is further configured to complete settlement processing using the face value according to the user selection once the response from the attendant terminal is received confirming authenticity of the gift certificate and the face value.

Optionally, in the checkout apparatus according to he second aspect of the invention, the controller is further configured to cause a display screen to display a notification that the gift certificate is not accepted for settlement of the sales transaction if the gift certificate in the captured image is not identified as the type accepted at the retail location for settlement.

According to a third aspect of the invention, it is provided a sales transaction processing method, comprising: capturing an image of an item being registered in a sales transaction; identifying the item in the image being registered by comparing the image to stored commodity reference information for a plurality of items for sale at the retail location; capturing an image of a gift certificate presented for settlement of the sales transaction; and identifying whether the gift certificate is a type accepted at the retail location for settlement of the sales transaction by comparing the gift certificate in the image to stored gift certificate reference information for a plurality of gift certificate types.

Optionally, the sales transaction processing method according to the third aspect of the invention further comprises sending notification to an attendant terminal when the gift certificate is identified as the type accepted at the retail location for settlement.

Optionally, the sales transaction processing method according to the third aspect of the invention further comprises displaying, on a display screen, a plurality of options for a face value of the gift certificate when the gift certificate is identified as the type accepted at the retail location for settlement.

Optionally, the sales transaction processing method according to the third aspect of the invention further comprises receiving an operator selection of one of the plurality of options for the face value; and settling the transaction using the face value according to the received operator selection.

Optionally, in the sales transaction processing method according to the third aspect of the invention, the operator is a store clerk at the retail location.

### DESCRIPTION OF THE DRAWINGS

FIG. 1 depicts a checkout system of a first embodiment.
FIG. 2 is a block diagram illustrating aspects of a hardware configuration of a POS terminal and a reading device.
FIG. 3 depicts a PLU file and an example of classifications in the PLU file.
FIGS. 4A and 4B are diagrams illustrating examples of a data configuration for dictionaries included in a PLU file.
FIG. 5 is a block diagram depicting a functional configuration of a control unit.
FIG. 6 is a flowchart depicting aspects of a checkout processing executed by a control unit.
FIG. 7 depicts a self-service checkout POS terminal according to a second embodiment.
FIG. 8 is a block diagram illustrating aspects of a hardware configuration of a self-service checkout POS terminal.
FIG. 9 is a block diagram depicting a functional configuration of a control unit.
FIG. 10 is a flowchart depicting aspect of a checkout processing performed by a self-service checkout POS terminal.
FIG. 11 depicts an example of a selection screen displayed on a display unit by a control unit.
FIG. 12 depicts an instruction screen displayed on a display unit by a control unit.
FIG. 13 depicts another example of a selection screen displayed on a display unit by a control unit.
FIG. 14 depicts a guidance screen displayed on a display unit by a control unit.
FIG. 15 depicts another example of an instruction screen displayed on a display unit by a control unit.
FIG. 16 depicts an error screen displayed on a display unit by a control unit.

### DETAILED DESCRIPTION

In general, according to one embodiment, a sales data processing terminal for a retail location comprises an image capturing device to capture an image of an item being registered in a sales transaction or a gift certificate presented for settlement of the sales transaction. A controller is configured to identify the item in the image being registered by comparing the image to stored commodity reference information for a plurality of items for sale at the retail location, and identify whether the gift certificate is a type accepted at the retail location for settlement of the sales transaction by comparing the gift certificate in the image to stored gift certificate reference information for a plurality of gift certificate types.

### First Embodiment

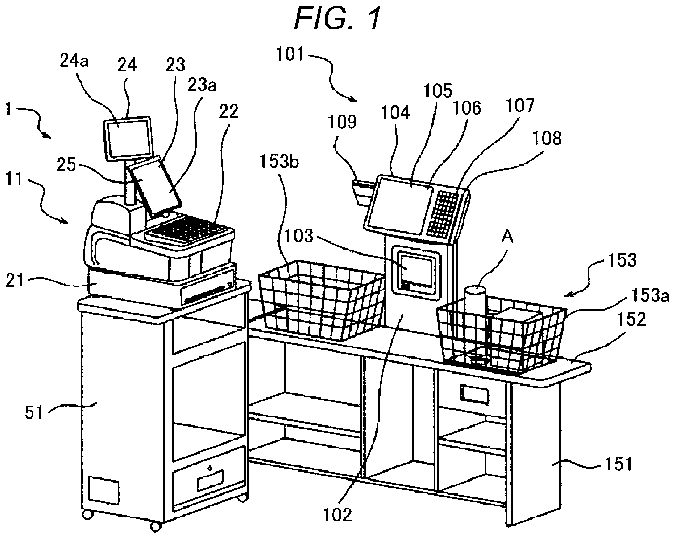

An example embodiment will be described with reference to the drawings. FIG. 1 is a perspective view illustrating a configuration of a checkout system 1. The checkout system 1 is an example of a sales data processing apparatus and includes a POS terminal 11, a drawer 21, and a reading device 101. An operator (a person who operates the system) in this embodiment is a store clerk.

The drawer 21 is placed on a checkout table 51, and the POS terminal 11 is placed on the upper surface of the drawer 21. The drawer 21 is a box for storing money and is controlled by the POS terminal 11 to be opened.

The POS terminal 11 registers a commodity (e.g., an item or product being sold in a sales transaction) read by the reading device 101, and handles settlement of the price of the registered commodity. The POS terminal 11 includes a keyboard 22, a display device 23, a customer display device 24, and a touch panel 25. The keyboard 22 is provided on the upper surface of a main body of the POS terminal 11, and is operated by the operator.

The display device 23 is disposed on the far side of the keyboard 22, when viewed from the operator side, and displays information on a display surface 23a provided facing the operator. The touch panel 25 is provided so as to overlap the display surface 23a and receive input operation (user selections) according to display contents on the display device 23 at a position touched/selected by the operator.

The customer display device 24 is disposed at position beyond than the display device 23 and includes a display surface 24a for displaying information to be provided to a customer. In FIG. 1, the display surface 24a appears to face toward the front side in the figure, but the orientation of the display surface 24a can be adjusted so that information is suitably provided to the customer.

The reading device 101 is placed on a load receiving surface 152 on the upper surface of a counter table 151. The counter table 151 is a horizontally elongated table and is disposed so as to form an L shape with the checkout table 51.

On the load receiving surface 152, a shopping basket 153 for storing a commodity A can be placed. A first shopping basket 153a, brought by the customer, and a second shopping basket 153b, positioned on an opposite end of the loading surface 152 with the reading device 101 positioned between the second shopping basket 153b and the first shopping basket 153a. The shopping baskets 153 is not particular limited to what is a specifically basket shape, but may be a box, a tray or the like in which. For example, the first shopping basket 153a can be a tray or the like as used in a shop such as a donut shop and the second shopping basket 153b is a paper box or the like.

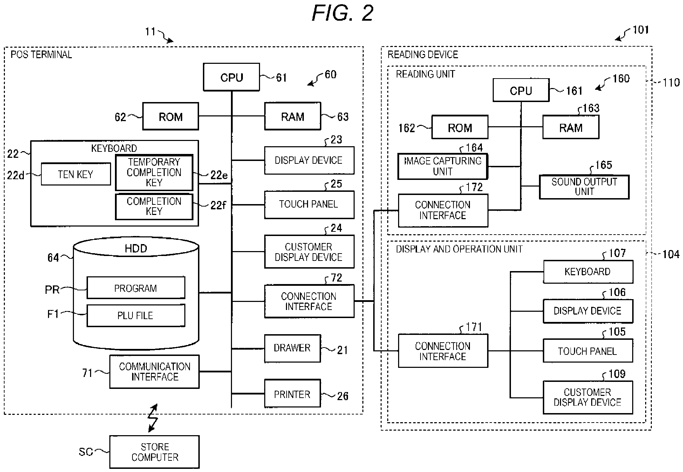

The reading device 101 is connected to the POS terminal 11 so as to transmit and receive data. The reading device 101 includes a housing 102, a reading window 103, a display and operation unit 104, a keypad 107, a card reading groove 108, a customer display device 109, and a reading unit 110 (see FIG. 2) .

Here, the housing 102 is a thin rectangular housing. A reading window 103 is formed of a transparent material and constitutes a part of the front face of the housing 102. The display and operation unit 104 includes a touch panel 105 and a display device 106, and is attached to an upper portion of the housing 102. The touch panel 105 is provided so as to overlap the surface of the display device 106. The keypad 107 is provided on the right side of the display and operation unit 104.

The card reading groove 108 is a part of a card reader that reads information stored on a magnetic stripe, such found on a credit card, and is provided on the right side of the keypad 107. The customer display device 109 is disposed on the left far side of the back surface of the display and operation unit 104, when viewed from the operator side, and provides information to the customer. The reading unit 110 includes an image capturing unit 164 (see FIG. 2) behind the reading window 103.

In the first shopping basket 153a, brought by the customer, a commodity A is stored. The commodity A is moved to the second shopping basket 153b by the operator. In this movement process, the commodity A is directed to the reading window 103

At this time, the image capturing unit 164 captures an image of the commodity A. The reading device 101 detects all or a part of the commodity A included in the captured image. When detecting that all or a part of the commodity A is included in a captured image, the reading device 101 outputs the captured image to the POS terminal 11.

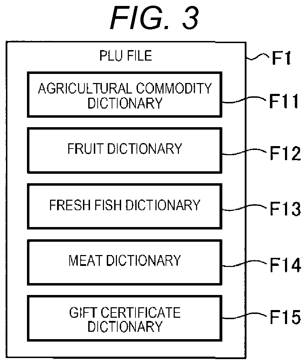

The POS terminal 11 refers to a PLU file F1 (see FIG. 3) in which information for sales registration of the commodity A and an image of the commodity A are associated with each other. The POS terminal 11 thus identifies the commodity A by recognizing the commodity A from the captured image, records sales registration information such as ID code, classification, name, unit price and the like for the specified commodity A in a sales master file or the like, and performs the sales registration processing accordingly.

FIG. 2 is a block diagram illustrating a hardware configuration of the POS terminal 11 and the reading device 101. The POS terminal 11 includes a control unit 60 that executes information processing. The control unit 60 is configured by connecting, via a bus, a read only memory (ROM 62) and a random access memory (RAM 63) to a central processing unit (CPU) 61, which executes various arithmetic processing and controls each unit. In the ROM 62, programs executed by the CPU 61 are stored.

The drawer 21, the keyboard 22, the display device 23, the touch panel 25, and the customer display device 24 described above are connected to the CPU 61 of the POS terminal 11. These components (drawer 21, keyboard 22, display device 23, touch panel 25, and customer display device 24) are controlled by the control unit 60.

The keyboard 22 includes a ten key 22d on which numeric keys such as "1", "2", "3",... and an operator of multiplication "x" is displayed on the upper surface, a temporary completion key 22e, and a completion key 22f. The temporary completion key 22e receives an instruction to start checkout of the registered commodities until operation reception of the temporary completion key 22e. The completion key 22f receives an instruction to fix a transaction settlement amount.

The display and operation unit 104 of the reading device 101 also includes keys corresponding to the ten key 22d, the temporary completion key 22e, and the completion key 22f.

A hard disk drive (HDD) 64 is connected to the CPU 61. The HDD 64 is an example of a storing unit and stores programs and various files. When the POS terminal 11 is activated, all or a part of the program and various files stored in the HDD 64 are copied to the RAM 63 and executed by the CPU 61. An example of a program stored in the HDD 64 is a program PR for sales data processing. An example of the file stored in the HDD 64 is a PLU file F1 distributed from a store computer SC and stored in the HDD 64.

The PLU file F1 is a commodity file in which the association between the information for the sales registration of the commodity A and the image of the commodity A is established for each commodity A being sold in the store. FIG. 3 is a diagram illustrating an example of a configuration of the PLU file F1 and illustrating a classification example of the PLU file F1.

The PLU file F1 is divided into an agricultural commodity dictionary F11, a fruit dictionary F12, a fresh fish dictionary F13, a meat dictionary F14, and a gift certificate dictionary F15. The agricultural commodity dictionary F11, the fruit dictionary F12, the fresh fish dictionary F13, the meat dictionary F14, and the gift certificate dictionary F15 are dictionaries for storing information for commodities to which no specific code symbol (e.g., a bar code) is attached. In addition to these dictionaries, the PLU file F1 also stores information on commodities to which code symbols are attached.

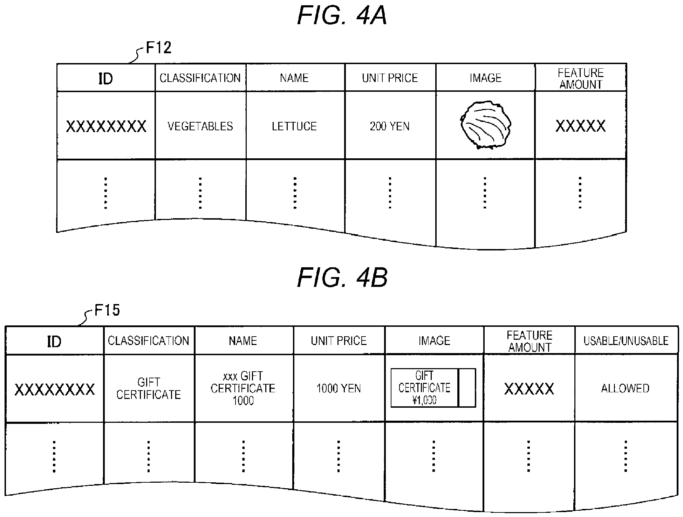

FIGS. 4A and 4B are diagrams illustrating an example of a data configuration of dictionaries included in the PLU file F1, and specifically illustrates an example of the data configuration of a fruit dictionary F12 in FIG. 4A and a gift certificate dictionary F15 in FIG. 4B from among the respective dictionaries F11 to F15. As illustrated in FIGS. 4A and 4B, the PLU file F1 stores information (ID, classification, name, unit price, and the like) for a commodity, a captured (reference) image of the commodity, and a feature value for the commodity.

The gift certificate dictionary F15 stores information such as classification, names, unit prices, reference images, and feature values for gift certificates of various types. Here, the feature value is an example of reference information to be used for recognizing a commodity or a gift certificate from a captured image. In addition, the gift certificate dictionary F15 includes a field for setting whether or not each gift certificate is usable or unusable. The gift certificates which are "usable" according to this field are those being accepted at the store (that is, the gift certificates are usable for settlement) . In addition, the gift certificates which are "disallowed" according to this field are not accepted at the store (that is, the gift certificates are unusable for settlement).

Returning to FIG. 2, a communication interface 71 is connected to the CPU 61. The communication interface 71 executes data communication with the store computer SC. The store computer SC is also called a store server and is installed in a backroom or the like of the store. In the HDD or the like of the store computer SC, the PLU file F1 for distribution to the POS terminal 11 is stored.

Furthermore, a connection interface 72 connects the CPU 61 and the reading device 101 to enable data transmission and reception between the CPU 61 and the reading device 101. A printer 26 for printing a receipt or the like is connected to the CPU 61. Under the control of the control unit 60, the POS terminal 11 prints transaction contents of each transaction on a receipt.

The reading device 101 includes a control unit 160. The control unit 160 is configured by connecting a ROM 162 and a RAM 163 to the CPU 161 via a bus. In the ROM 162, a program executed by the CPU 161 is stored. The image capturing unit 164 and a sound output unit 165 are connected to the CPU 161. The operations of the image capturing unit 164 and the sound output unit 165 are controlled by the control unit 160. The display and operation unit 104 is connected to the POS terminal 11 via the connection interface 171. The operation of the display and operation unit 104 is controlled by the control unit 60 of the POS terminal 11.

The image capturing unit 164 is, for example, a color CCD image sensor, a color CMOS image sensor, or the like. Under the control of the control unit 160, the image capturing unit 164 captures an image of an article via the reading window 103 and outputs a captured image. For example, the image capturing unit 164 captures a moving image at 30 fps. The frame images sequentially captured by the image capturing unit 164 at a predetermined frame rate are stored in the RAM 163.

The sound output unit 165 is a sound circuit and a speaker for generating a preset warning sound or the like. The sound output unit 165 performs notification by sounds such as a warning sound under the control of the control unit 160.

Furthermore, a connection interface 172 that is connected to the connection interface 72 of the POS terminal 11 is connected to the CPU 161. Under the control of the control unit 160, an image (e.g., an image including all or a part of the commodity A) captured by the image capturing unit 164 of the reading device 101 is output via the connection interface 172 to the POS terminal 11 via the connection interface 72.

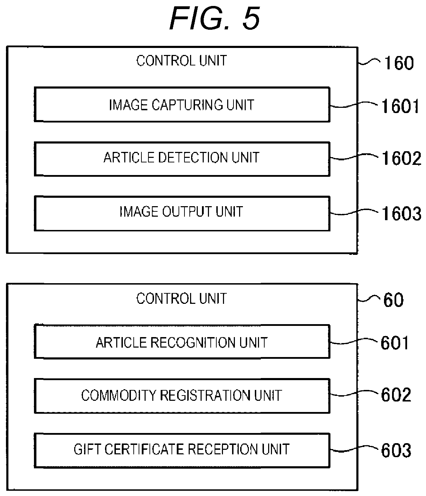

FIG. 5 is a block diagram illustrating an example of a functional configuration of the control unit 160 and the control unit 60.

As illustrated in FIG. 5, the control unit 160 of the reading device 101 realizes functions of an image capturing unit 1601, an article detection unit 1602, and an image output unit 1603 by execution a program or programs by the CPU 61. Similarly, the control unit 60 of the POS terminal 11 realizes the functions of an article recognition unit 601, a commodity registration unit 602, and a gift certificate reception unit 603 by execution of a program or programs by CPU 161.

The image capturing unit 1601 outputs an image capturing ON signal to the image capturing unit 164 and causes the image capturing unit 164 to start an image capturing operation. The image capturing unit 1601 successively captures frame images with the image capturing unit 164 and stores the captured frames in the RAM 163 after the start of the image capturing operation. Capturing of the frame images by the image capturing unit 1601 is performed in the order of storage in the RAM 163.

The article detection unit 1602 detects all or a part of the articles (e.g., commodities A and/or gift certificates) included in the frame image captured by the image capturing unit 1601 by using, for example, a pattern matching technique or the like. Specifically, a contour line and the like are extracted from a binarized image obtained by binarizing the captured frame image. Next, a contour line extracted from the latest frame image is compared with a contour line extracted from the current frame image, and a changed portion, that is, reflection of the commodity directed toward the reading window 103 for sales registration is detected.

The image output unit 1603 outputs the subset of the frame images captured in which the article detection unit 1602 detects at least a part of an article from among all the captured frame images to the POS terminal 11 via the connection interface 172.

An article recognition unit 601 of the POS terminal 11 is an example of an identification unit. The article recognition unit 601 compares the captured image output by the image capturing unit 164 with already stored basic information and identifies the article included in the captured image(s).

The article recognition unit 601 refers to the images in the PLU file F1 and obtains values (feature values) corresponding to a surface condition the article such as color and surface texturing images captured by the image capturing unit 164 and recognizing the article as particular commodity A or gift certificate by comparison to reference values or the like.

The feature value is obtained by parameterizing appearance features such as a shape, a color of a surface, a patterning, surface texture, and the like of the commodity or the gift certificate. Based on the recognition result from the article recognition unit 601, the POS terminal 11 identifies the commodity that was read (imaged) by the reading device 101 from the commodities stored in advance in the PLU file F1.

Recognizing the article included in an image in this way is referred to as generic object recognition.

The commodity registration unit 602 records information for sales registration associated with the recognized commodity, that is, an ID, classification, name, unit price, and the like of the commodity specified from the captured image output by the reading device 101 and performs sales registration accordingly.

Here, when registration of commodities is ended, the POS terminal 11 proceeds to checkout processing. The article recognition unit 601 compares the captured image output by the image capturing unit 164 during the checkout processing after commodity registration with the stored reference information (for example, feature values) of gift certificates. That is, with respect to the captured image input during the checkout processing, the article recognition unit 601 attempts to determine what has been read by the reading device 101 from among those gift certificates already stored in the gift certificate dictionary F15 of the PLU file F1. More specifically, the article recognition unit 601 extracts, from the gift certificate dictionary F15, information of the gift certificate whose similarity according the feature value(s) of the captured image is greater than a predetermined threshold as a gift certificate that is highly likely to match the captured image.

When setting of usable or unusable is set as "unusable" in the information for the extracted gift certificate, the article recognition unit 601 outputs information that the gift certificate cannot be used. Further, when setting of usable or unusable is set as "usable" in the information of the extracted gift certificate, the article recognition unit 601 outputs the gift certificate as an option (an identification candidate).

Here, the color and pattern of the gift certificate are generally different depending on an issuer. Hereinafter, gift certificates with the same issuer (that is, the color and pattern of the coupon face are the same) but of different amounts according to the certificate face value are considered to be gift certificates of the same type but different amounts.

Since the article recognition unit 601 recognizes the gift certificate by generic object recognition, the article recognition unit 601 can also recognizes the face value of the gift certificate by a pattern on the gift certificate or the like. For that reason, the article recognition unit 601 does not necessarily need to recognize the value of the certification at this point in time. Therefore, the article recognition unit 601 outputs a gift certificate having a high degree of similarity as a gift certificate even if the reference image has a value different from the imaged gift certificate as an option.

By applying an optical character recognition/reader (OCR; optical character recognition)) technology, it is possible to read the numbers indicating gift certificates face value. However, even in this case, the precision of OCR reading cannot be said to be such that a correct result can always be obtained and thus, it may be necessary to confirm the amount in person (e.g., the store clerk may confirm the OCR result) . In contrast, it is less likely to erroneously recognize the type of gift certificate, and different amounts of money for the same type of gift certificate are often represented by 2 to 3 different patterns. Therefore, at this stage, it is considered preferable to present all the gift certificates of the same type and different amounts as options and leave the selection to the store clerk.

The gift certificate reception unit 603 causes the display device 23 to display the image of the gift certificate extracted by the article recognition unit 601 as an option and receives an operation through the touch panel 25 to select from the displayed options. The operator checks whether the type of the gift certificate which is regarded as an option matches the gift certificate received from the customer, and if the gift certificates matches, the operator makes a selection that matches the face value of the customer's gift certificate. The selection operation is performed by touching a position on the touch panel 25. In response to the selection operation, the control unit 60 determines that there has been a deposit of the gift certificate up to a purchase price, and if there is the balance (also referred to as the remaining amount) when the value of the gift certificate is subtracted from the purchase price, the control unit 60 requests the balance.

Although it may be difficult for the store clerk to determine whether or not any particular gift certificate presented by a customer acceptable at the store due to the many possible types of gift certificates in circulation, because image data of the gift certificate captured by the image capturing unit 164 can be checked against the gift certificate dictionary F15, as described above, it is possible to eliminate the potential processing complication of requiring the store clerk to visually compare the presented gift certificate to various entries in a reference table, book, or the like to determine certificate acceptability.

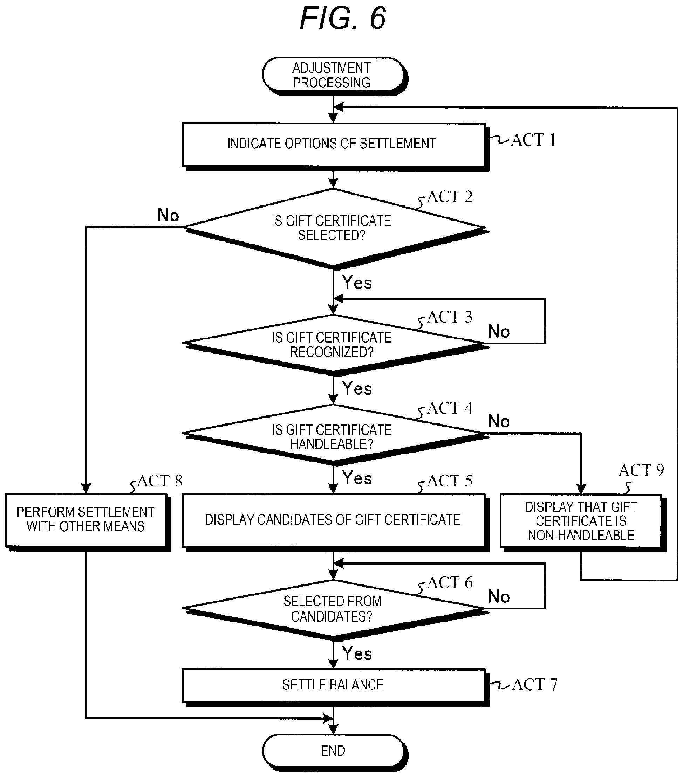

FIG. 6 is a flowchart illustrating an example of a flow of checkout processing executed by the control unit 60.

The control unit 60 starts the checkout processing upon receiving a predetermined operation (input) by the operator. The operation for starting the checkout processing can be received via a dedicated key corresponding to the temporary completion key 22e or an equivalent to the temporary completion key 22e displayed on display device 106 of operation unit 104.

In the following description, although a case where screens are displayed on the display device 23, and various input operations are made via the touch panel 25 and the keyboard 22 of the POS terminal 11 is described as an example, it is also possible for the described screens and input operations of the present embodiment to be displayed and received during checkout processing via operation unit 104 (comprising display device 106, touch panel 105, and keypad 107).

In the checkout processing, the control unit 60 indicates options for checkout via the display device 23 (Act 1). In the checkout system 1, transaction settlement can be carried out by cash, credit cards, and gift certificates. The control unit 60 causes the display device 23 to display buttons including letters and symbols capable of discriminating between each option, and receives selection of a button through the touch panel 25. In general, the operator selects the settlement option(s) on touch panel 25 based on listening to the customer or visual cues, such presentation of the gift certificate, or the like.

When settlement with a gift certificate is selected (Yes in Act 2), the control unit 60 waits (No in Act 3) until the article recognition unit 601 recognizes the gift certificate. Once the gift certificate is recognized (Yes in Act 3), the article recognition unit 601 refers to the setting indicating usable or unusable in the appropriate entry in the gift certificate dictionary F15 for the recognized gift certificate, and determines whether the gift certificate is acceptable (handleable) at the store (Act 4).

If the article recognition unit 601 determines that the gift certificate appears acceptable (Yes in Act 4), the gift certificate reception unit 603 causes the display device 23 to display recognition candidates for the gift certificate as an option (Act 5). Here, gift certificates of the same type but different amounts (face values) are presented as options.

Next, the gift certificate reception unit 603 waits (No in Act 6) for selection from the candidates. The operator selects an option that matches the amount on the face of the gift certificate presented by the customer. When it is determined that the gift certificate reception unit 603 receives an operation to select an option (Yes in Act 6), the control unit 60 performs settlement of the balance (Act 7). Specifically, in Act 7, the control unit 60 calculates the balance by subtracting the amount of the gift certificate as selected in Act 6 from a checkout amount, and if the balance is a positive number, settlement of the remaining balance is accepted by cash or the like.

In Act 2, when an option (e.g., cash, credit card, or the like) other than gift certificates is selected (No in Act 2), the control unit 60 performs settlement using some other means (cash, credit card, and the like) (Act 8).

When the article recognition unit 601 determines that the gift certificate recognized in Act 3 cannot be handled (accepted) by the store (No in Act 4), the control unit 60 notifies the operator by displaying a notice on the display device 23 that the gift certificate cannot be handled (Act 9).

As described above, according to this first embodiment, whether a particular gift certificate can be handled by a store can be determined without depending on a store clerk's memory. With this configuration, it is possible to more smoothly accept gift certificates handled at the store and proceed with price adjustment and settlement even when a store clerk is unfamiliar with gift certificate types. In addition, it is possible to eliminate inconveniences such as improper settlement with a gift certificate not meant to be handled at the store.

### Second Embodiment

For the second embodiment, description of the portions or aspects which are the same as described in the first embodiment will be omitted, and, primarily, portions or aspects which are different from those of the first embodiment will be described. In the following description, the same reference numerals are used for those portions or aspects already described in the first embodiment.

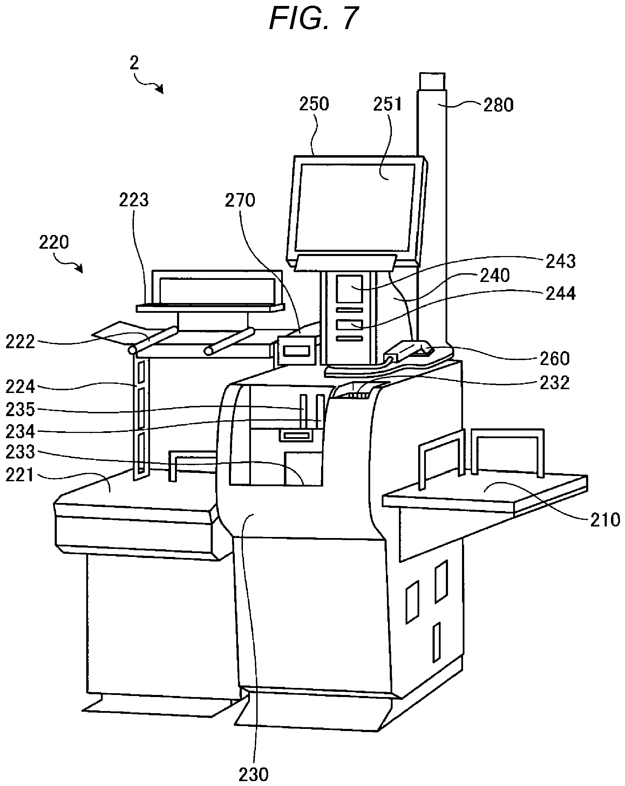

FIG. 7 is a perspective view illustrating an example of the appearance of a self-service checkout POS terminal 2. The self-service checkout POS terminal 2 is an apparatus that a customer himself or herself becomes an operator to register and settle a commodity, and also called a self-service checkout apparatus.

With the self-service checkout POS terminal 2 the customer himself or herself registers (e.g., scans) the commodities to be purchased and then performs settlement (payment) operations without substantial aide of a store clerk. The self-service checkout POS terminal 2 includes a first loading table 210, a second loading table 220, and a first casing 230.

A customer who uses the self-service checkout POS terminal 2 places a basket or the like containing a commodity to be purchased on the first loading table 210. A bag containing the commodities for which registration (e.g., scanning) has been completed is placed on the second loading table 220. The customer registers each commodity taken out of the basket by using a device placed on the first casing 230. Then, the customer puts each registered commodity into the bag on the second loading table 220. When registration of all commodities has been completed, the customer settles the sales transaction using a device included in the first casing 230. Through such a procedure, the customer may register the items in the transaction and then settle the transaction by himself or herself alone.

The second loading table 220 includes a pedestal 221, a hook 222, and a temporary table 223. The hook 222 and the temporary table 223 are supported by a support column 224 on the pedestal 221 and are thus supported above the pedestal 221. The pedestal 221 is, for example, a table on which a commodity or the like that is unsuitable for putting in bags, perhaps due to being a larger size than the bag, can be placed. The hook 222 is a hook upon which a bag for containing the registered items can be suspended. The temporary table 223 is a table for permitting the temporary placement of a commodity requiring particular attention in bagging, for example a fragile commodity or the like.

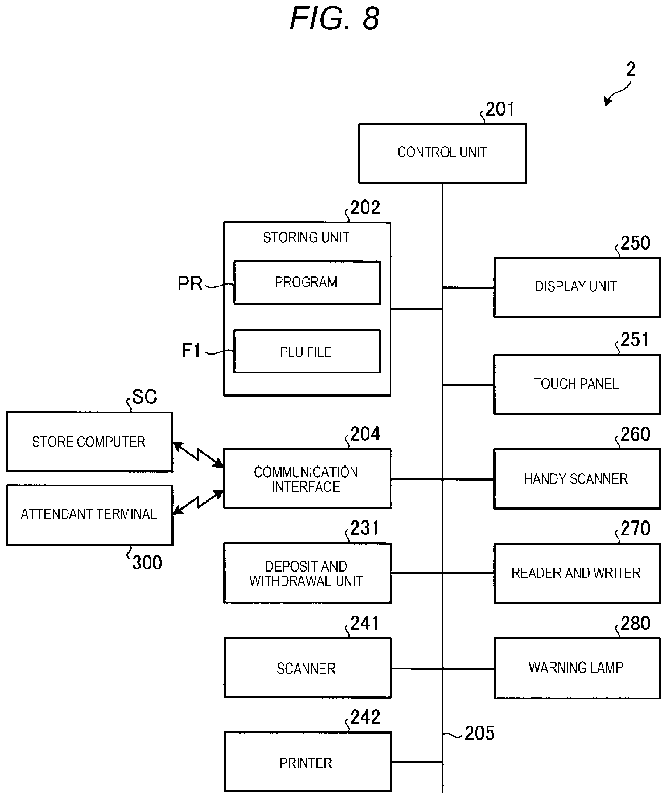

The first casing 230 includes a deposit and withdrawal unit 231 (see FIG. 8) for permitting deposit and withdrawal of coins, paper currency, and the like. The first casing 230 includes a coin input port 232, a coin payout port 233, a bill input slot 234, and a bill payout port 235. The coin input port 232 is a deposit port permitting a coin to be deposited by the customer as payment for the commodity. The coin payout port 233 is a withdrawal port from which a coin from the deposit and withdrawal unit 231 is supplied as change. The bill input slot 234 is a deposit port permitting a bill (paper currency) to be deposited by the customer as payment for the commodity. The bill payout port 235 is a withdrawal port via which a bill from the deposit and withdrawal unit 231 is supplied as change. It is assumed that the inventory (or quantity) of the bills and coins stored in the deposit and withdrawal unit 231 is counted by denomination according to a known technique.

The self-service checkout POS terminal 2 includes a second casing 240, a display unit 250, a hand-held scanner 260, a reader and writer 270, and a warning lamp 280 on the upper surface of the first casing 230.

A scanner 241 (see FIG. 8) and a printer 242 (see FIG. 8) are included in the second casing 240. The second casing 240 includes a reading window 243 for the scanner 241 permitting the reading of a commodity code symbol, such as a bar code, attached to a commodity being registered in the sales transaction. The reading window 243 transmits laser light emitted from the scanner 241 and transmits reflected light from a commodity to the scanner 241.

The scanner 241 also or instead captures an image of a commodity lacking a code symbol and recognizes the commodity in the captured image by generic object recognition processing. Here, the scanner 241 performs a function equivalent to the image capturing unit 164 in the first embodiment. Accordingly, the scanner 241 is an example of an image capturing unit.

The scanner 241 first attempts to determine whether or not a code symbol is attached to a commodity being held over the reading window 243. When a code symbol is attached, the scanner 241 reads the code symbol. If the code symbol is not attached, the scanner 241 attempts to recognize the commodity by generic object recognition methods.

The second casing 240 includes a receipt issuance port 244 for discharging a transaction receipt or the like output by the printer 242. The printer 242 discharges the receipt for the transaction from the receipt issuance port 244.

The second casing 240 supports a display unit 250 provided on the upper portion of the second casing 240. The display unit 250 performs functions corresponding to the display device 23 and the display device 106 in the first embodiment, and is, for example, a liquid crystal display or the like. The display unit 250 displays information concerning candidate commodities for the commodity being recognized. The display unit 250 also displays commodity information (e.g., commodity name, price, etc.) of each registered commodity. Furthermore, the display unit 250 displays a guidance screen for explaining an operation method for the self-service checkout POS terminal 2 and a checkout screen or the like for displaying the total amount of money due in the sales transaction, the deposited amount, the change amount due, and the like, and permitting the selecting of a payment method.

The display unit 250 includes a touch panel 251 by which the customer may operate the self-service checkout POS terminal 2. The touch panel 251 performs functions corresponding to the touch panel 25 and the touch panel 105 in the first embodiment. The touch panel 251 detects a position at which an input operation is performed (position where the screen has been touched) on the display unit 250, and determines that an operation request corresponding to a displayed element at the touched position on the display unit 250 has been made.

The hand-held scanner 260 is sometimes referred to as a "handy scanner." The hand-held scanner 260 can used when it is difficult to hold or position a commodity such that a barcode or the like is viewable through the reading window 243, such as when the particular commodity is heavy or large.

A reader and writer 270 reads and writes information related to electronic settlement from a card medium or other storage medium used for electronic settlement such as credit cards, electronic money systems, or the like.

The warning lamp 280 blinks in red or other colors for notifying the store clerk of an abnormality at the self-service checkout POS terminal 2. The warning lamp 280, for example, notifies the store clerk that the customer has erroneously operated the self-service checkout POS terminal 2 in some manner.

FIG. 8 is a block diagram illustrating an example of the hardware configuration of the self-service checkout POS terminal 2.

The self-service checkout POS terminal 2 includes a control unit 201, a storing unit 202, a communication interface 204, the deposit and withdrawal unit 231, the scanner 241, the printer 242, the display unit 250, the touch panel 251, the hand-held scanner 260, the reader and writer 270, and the warning lamp 280. These units are connected to each other via a system bus 205.

The control unit 201 is a computer that controls the overall operation of the self-service checkout POS terminal 2 and realizes the various functions of the self-service checkout POS terminal 2. The control unit 201 includes a CPU, a ROM, and a RAM. The CPU controls the overall operation of the self-service checkout POS terminal 2. The ROM is a storage medium that stores various programs and data. The RAM is a storage medium that temporarily stores various programs and data. The CPU executes a program stored in the ROM or the storing unit 202 using the RAM as a work area. That is, the control unit 201 has a general computer configuration.

The storing unit 202 is a storage device such as an HDD or a solid state drive (SSD) . The storing unit 202 stores the program PR and the PLU file F1 provided from the store computer SC that monitors the self-service checkout POS terminal 2.

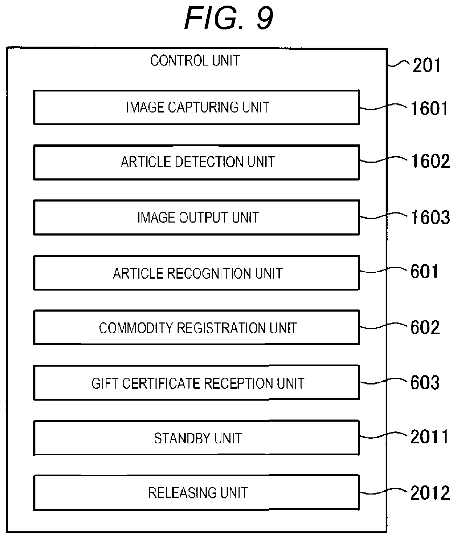

The program PR operates in conjunction with an operating system and internal functions of the self-service checkout POS terminal 2. The program PR includes program instructions for realizing the functional operations of the self-service checkout POS terminal 2 according to this second embodiment. By executing program PR, the control unit 201 realizes each functional unit illustrated in FIG. 9.

The communication interface 204 for communicating with the store computer SC and an attendant terminal 300 via a network. The attendant terminal 300 is used by a store clerk, who functions as an attendant monitoring multiple self-service checkout POS terminals 2 or the like. The attendant (store clerk) takes care of the customers operating the self-service checkout POS terminals 2 as necessary.

FIG. 9 is a block diagram illustrating an example of a functional configuration of the control unit 201. The control unit 201 functions as the image capturing unit 1601, the article detection unit 1602, the image output unit 1603, the article recognition unit 601, the commodity registration unit 602, the gift certificate reception unit 603, a standby unit 2011, and a releasing unit 2012. That is, the control unit 201 has the functions of both the control unit 60 and the control unit 160 described in the first embodiment, and additionally functions as the standby unit 2011 and the releasing unit 2012.

When an operation to select from the options output by the article recognition unit 601 is received, the standby unit 2011 temporarily stops the checkout processing and waits for response by the attendant. When the response from the attendant is received, the releasing unit 2012 releases temporary hold on the checkout processing and restarts the checkout processing.

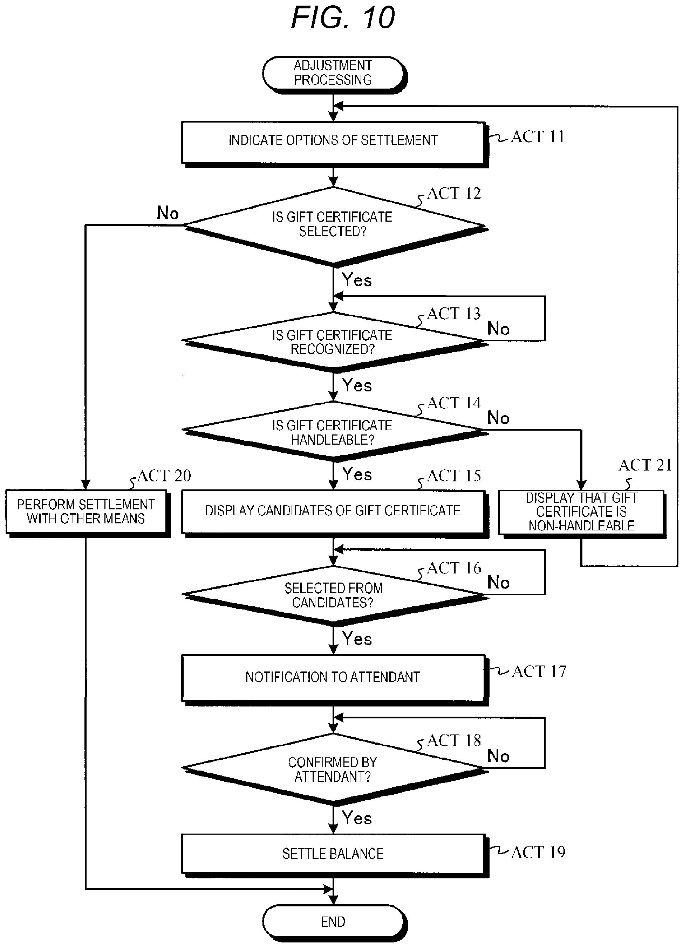

FIG. 10 is a flowchart illustrating an example of a flow of checkout processing performed by the self-service checkout POS terminal 2. Acts 11 to 16 in this processing substantially correspond to Acts 1 to 6 of the checkout processing illustrated in FIG. 6 for the first embodiment and thus, further description thereof will be omitted. In addition, since Acts 19 to 21 in this processing substantially correspond to Acts 7 to 9 of the checkout processing illustrated in FIG. 6 in the first embodiment and thus, further description thereof will also be omitted. In this processing example, a step of notifying the attendant (Act 17) and a step of confirmation by the attendant (Act 18) are added between Act 6 and Act 7 of the first embodiment.

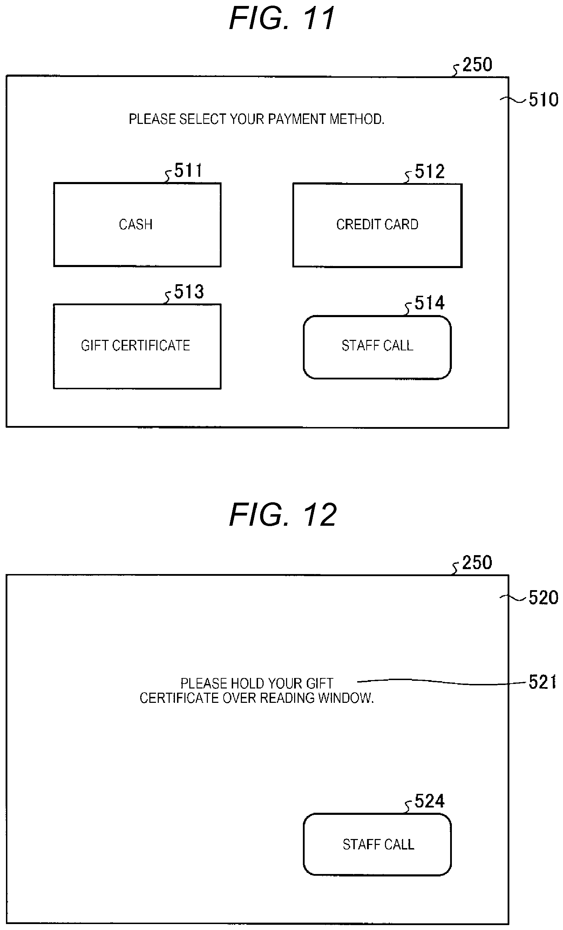

FIG. 11 is a diagram illustrating an example of a selection screen 510 to be displayed on the display unit 250 by the control unit 201. The selection screen 510 is displayed on the display unit 250 in Act 11. The selection screen 510 includes a cash payment selection button 511, a credit card settlement selection button 512, a gift certificate payment selection button 513, and a staff call button 514.

The cash payment selection button 511 indicates an intention to pay by cash. The credit card settlement selection button 512 indicates an intention to pay by credit card. The gift certificate payment selection button 513 indicates an intention to use a gift certificate for payment. The staff call button 514 calls a store staff member when pressed.

The self-service checkout POS terminal 2 permits settlement using cash, a credit card, and a gift certificate. The customer selects one of the selection buttons 511 to 513 on the selection screen 510 according to payment preference. Further, when there is business such as asking questions about an unknown point, the customer operates the staff call button 514. When the customer selects any one of the buttons 511 to 514, the control unit 201 performs processing based on a corresponding signal from the touch panel 251.

FIG. 12 is a diagram illustrating an example of an instruction screen 520 to be displayed on the display unit 250 by the control unit 201. When the determination result in Act 12 is Yes, that is, when the gift certificate payment selection button 513 is pressed on the selection screen 510, the control unit 201 causes the display unit 250 to display the instruction screen 520.

The instruction screen 520 includes a guidance sentence 521 and a staff call button 524. The staff call button 524 calls the attendant when pressed. The guidance sentence 521 prompts the reading of the gift certificate using the scanner 241. For example, the guidance sentence 521 reads, "Please hold your gift certificate over the reading window".

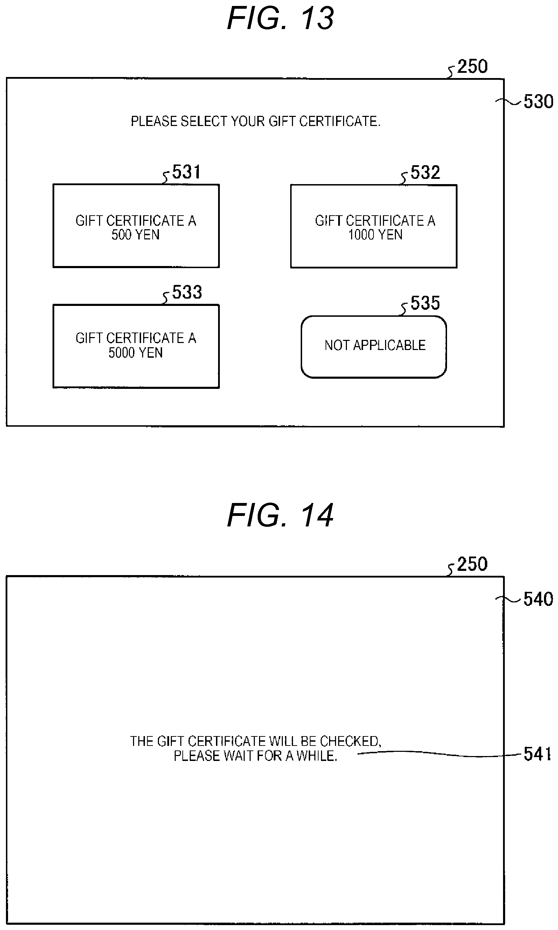

FIG. 13 is a diagram illustrating an example of a selection screen 530 to be displayed on the display unit 250 by the control unit 201. The selection screen 530 causes the gift certificate reception unit 603 to display matters related to the gift certificate on the display unit 250 in Act 15.

Here, the selection screen 530 includes gift certificate value/type selection buttons 531 to 533 and a "Not Applicable" button 535. The gift certificate selection buttons 531 to 533 correspond to each of the options output by the article recognition unit 601. That is, for example, when there are three options, the gift certificate selection button 531 is displayed as a button for selecting a first option, the gift certificate selection button 532 is displayed as a button for selecting a second option, and the gift certificate selection button 533 is displayed as a button for selecting a third option. If additional options are identified, additional selection buttons may be provided.

The "Not Applicable" button 535 is a button for making indicating that none of the options represented by the gift certificate selection buttons 531 to 533 coincide with the gift certificate that was held over the reading window 243. When the "Not Applicable" button 535 is selected, the control unit 201 may function to call the attendant or may return processing to Act 11.

FIG. 14 is a diagram illustrating an example of a guidance screen 540 to be displayed on the display unit 250 by the control unit 201. When the determination result in Act 16 is Yes, that is, when one of the gift certificate selection buttons 531 to 533 is selected from the selection screen 530, the guidance screen 540 causes the standby unit 2011 to display a message on the display unit 250.

Here, the guidance screen 540 includes a guidance sentence 541. The guidance sentence 541 requests that the customer wait for the attendant. For example, the guidance sentence 541 reads, "The gift certificate will be checked, please wait for a while".

The standby unit 2011 displays the guidance screen 540, signals the attendant terminal 300 with information that enables identification of the self-service checkout POS terminal 2 at which a gift certificate is being used (Act 17), and then waits for a confirmation from the attendant (No in Act 18).

Upon receiving the notification from the standby unit 2011, the attendant terminal 300 provides notification to the attendant including information identifying the self-service checkout POS terminal 2 at which the gift certificate is to be used. The notification here is performed by, for example, displaying characters or symbols on a display device at the attendant terminal 300 or by emitting sounds through a speaker.

The attendant then goes to the identified self-service checkout POS terminal 2. The attendant then receives the gift certificate from the customer and checks the authenticity and value of the gift certificate. If the gift certificate matches the gift certificate selected in Act 16 (Yes in Act 18), the attendant performs an operation advancing the checkout processing to Act 19.

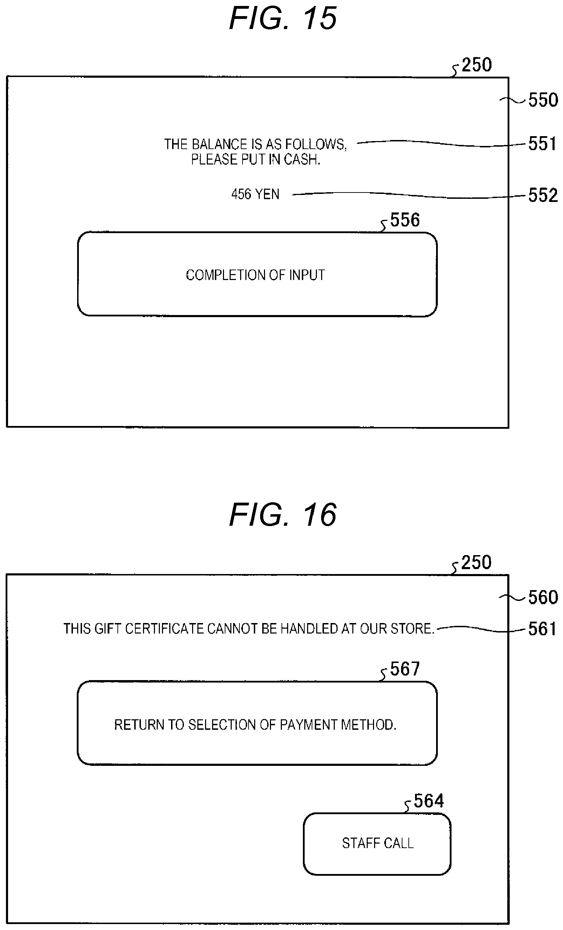

FIG. 15 is a diagram illustrating an example of an instruction screen 550 to be displayed on the display unit 250 by the control unit 201. The control unit 201 causes the display unit 250 to display the instruction screen 550 in Act 19.

The instruction screen 550 includes a guidance sentence 551, an amount of money display 552, and an input completion button 556. The guidance sentence 551 prompts the customer to deposit money (or make payment) equal to the balance, such as "The balance is as follows, please put in cash". The amount of money display 552 indicates the balance obtained by subtracting the face value of the gift certificate from the price of the registered items. An operation for informing that depositing has been completed is provided by selection of the input completion button 556. When the input completion button 556 is pressed, the control unit 201 proceeds to calculation of change due.

FIG. 16 is a diagram illustrating an example of an error screen 560 to be displayed on the display unit 250 by the control unit 201. The control unit 201 causes the display unit 250 to display the error screen 560 in Act 21.

The error screen 560 includes a guidance sentence 561, a staff call button 564, and a return button 567. The guidance sentence 561 notifies the customer that the gift certificate held over the reading window 243 is not accepted at the store. For example, the guidance sentence 561 reads, "This gift certificate cannot be handled at our store". The staff call button 564 calls the attendant when pressed. The return button 567 for example, reads, "Return to selection of payment method". When the return button 567 is selected, the control unit 201 returns processing to Act 11.

As described above, according to this second embodiment, it is possible for the checkout system 1 to determine, without depending on a store clerk, whether a gift certificate is acceptable at a store.

With this configuration, the attendant only checks authenticity and the value of the presented gift certificate and not whether the gift certificate is of the type acceptable at the store. Thus, , a burden on the attendant can be reduced to the extent that the attendant is not called when the self-service checkout POS terminal 2 determines a particular gift certificate is not of an acceptable type for the store. As compared to a system of the existing art in which a store clerk must check a presented gift certificate every time a customer attempts to use the gift certificate for settlement. The burden on the attendant is thus reduced as compared to the prior art. Similarly, the present embodiment, it is possible to eliminate potential inconvenience to the customer in that it becomes unnecessary to wait for a store clerk to arrive and inform the customer that the gift certificate is of an unacceptable type since such identification is automated and provided directly via the self-service checkout POS terminal 2 according to the present embodiment.

Even if the attendant is not familiar with the gift certificate, it is possible to smoothly accept the gift certificates handled at the store and perform adjustments/settlement. In addition, it is possible to eliminate inconveniences such as settlement with a gift certificate not actually acceptable at the store.

### Modification example

A semi-self checkout system includes a registration apparatus and an accounting apparatus. The registration apparatus is an example of a sales data processing apparatus and is utilized for commodity registration and has a configuration substantially similar to the reading device 101 of the first embodiment. The accounting apparatus is one example of a self-service checkout apparatus. The accounting apparatus is utilized for settlement in a checkout system configuration in which the loading tables 210 and 220 and the scanner 241 are removed from the self-service checkout POS terminal 2 of the second embodiment.

In the semi-self checkout system if the registration apparatus is operated by a customer (rather than a store clerk) and a gift certificate is presented to the reading device 101, then checkout processing substantially similar to the first embodiment is performed. With this configuration, it is possible to improve convenience of such a semi-self checkout system when a gift certificate is presented.

If the accounting apparatus of a semi-self checkout system is operated by a customer and a gift certificate is presented at the accounting apparatus, then checkout processing substantially similar to the second embodiment can be performed. With this configuration, it is possible to improve convenience when the settling with a gift certificate is performed in a semi-self checkout system.

A program to be executed by the sales data processing apparatus or the self-service checkout apparatus according to the embodiments described above can be provided by being incorporated in a ROM or the like in advance. Alternatively, such a program can be stored in a non-transitory computer-readable recording medium such as a CD-ROM, a flexible disk (FD), a CD-R, a digital versatile disk (DVD), or the like as a file in installable format or executable format for installation or execution.

Furthermore, such a program to be executed by the sales data processing apparatus or the self-service checkout apparatus according the above-described embodiments can be stored on a computer connected to a network, such as the Internet, and then provided by being downloaded or distributed via the network e.

A program to be executed by the sales data processing apparatus or the self-service checkout apparatus according to above-described embodiments may be considered to have a modular configuration in which respectively described units (e.g., image capturing unit 1601, article detection unit 1602, image output unit 1603, article recognition unit 601, commodity registration unit 602, gift certificate reception unit 603, standby unit 2011, and releasing unit 2012) are appropriately included. The CPU (processor) reads the program from a storage medium and executes the program to load each unit described above as necessary onto a main storage device. With this configuration, the image capturing unit 1601, the article detection unit 1602, the image output unit 1603, the article recognition unit 601, the commodity registration unit 602, the gift certificate reception unit 603, the standby unit 2011, and the releasing unit 2012 are considered generated on the main storage device.

While certain embodiments have been described, these embodiments have been presented by way of example only, and are not intended to limit the scope of the present disclosure. Indeed, the novel methods and systems described herein may be embodied in a variety of other forms; furthermore, various omissions, substitutions, and changes in the form of the methods and systems described herein may be made without departing from the scope of the present invention as defined by the appended claims. The accompanying claims and their equivalents are intended to cover such forms or modifications as would fall within the scope of the present invention as defined by the appended claims.

## Claims

1. A sales data processing terminal for a retail location, comprising:
an image capturing device to capture an image of an item being registered in a sales transaction or a gift certificate presented for settlement of the sales transaction; and
a controller configured to:
identify the item in the image being registered by comparing the image to stored commodity reference information for a plurality of items for sale at the retail location, and
identify whether the gift certificate is a type accepted at the retail location for settlement of the sales transaction by comparing the gift certificate in the image to stored gift certificate reference information for a plurality of gift certificate types.

2. The sales data processing terminal according to claim 1, wherein the controller is further configured to display a candidate match for the gift certificate on a display screen, the candidate match being identified from the stored gift certificate reference information according to a calculated similarity value obtained by generic object recognition processing.

3. The sales data processing terminal according to claim 1 or 2, further comprising:
a display screen connected to the controller, wherein the controller is further configured to display a candidate match for the gift certificate on the display screen, the candidate match being identified from the stored gift certificate reference information according to a calculated similarity value obtained by generic object recognition processing.

4. The sales data processing terminal according to any of claims 1 to 3, wherein the controller uses generic object recognition to identify the item in the image being registered.

5. The sales data processing terminal according to any of claims 1 to 4, wherein the controller uses generic object recognition to identify whether the gift certificate is the type accepted at the retail location for settlement of the sales transaction.

6. The sales data processing terminal according to any of claims 1 to 5, wherein the stored commodity reference information is in a first dictionary of a PLU file and the stored gift certificate reference information is in a second dictionary of the PLU file.

7. The sales data processing terminal according to any of claims 1 to 6, further comprising:
a storage device storing the stored commodity reference information and the stored gift certificate reference information.

8. The sales data processing terminal according to any of claims 1 to 7, further comprising:
a display screen; and
an operator input unit, wherein
when the gift certificate in the image is identified by the controller as the type accepted at the retail location, the controller causes the display screen to display a plurality of options for a face value of the gift certificate and the face value of the gift certificate used in settlement of the sales transaction is set by a selection of one of the plurality of options made via the operator input unit.

9. The sales data processing terminal according to any of claims 1 to 8, wherein the controller is further configured to cause a display screen to display a notification that the gift certificate is not accepted for settlement of the sales transaction if the gift certificate in the image is not identified as the type accepted at the retail location for settlement.

10. A checkout apparatus, comprising:
an image capturing device that captures an image of an article and outputs a captured image;
a storage unit that stores first reference information for recognizing an item in a sales transaction and second reference information for recognizing a gift certificate presented for settlement of the sales transaction; and
a controller configured to:
identify the article in the captured image by comparing the captured image to the first reference information or the second reference information,
register the item in the sales transaction when the article in the captured image is identified using the first reference item as a particular item in the sale transaction,
determine whether or not the gift certificate is a type accepted at the retail location for settlement of the sales transaction using the second reference information when the article in the captured image is identified as a gift certificate, and
display a notification on a display screen indicating the gift certificate is not the type accepted at the retail location for settlement when it is determined the gift certificate is not the type accepted at the retail location.

11. The checkout apparatus according to claim 10, wherein the controller is further configured to:
send a notification to an attendant terminal indicating the gift certificate has been presented for settlement and is the type accepted at the retail location for settlement, and
delay settlement processing until a response from the attendant terminal is received confirming authenticity of the gift certificate and providing a face value for the gift certificate, wherein preferably the controller is further configured to complete settlement processing using the face value for the gift certificate provided in the response from the attendant terminal.

12. The checkout apparatus according to claim 10 or 11, further comprising:
a display screen; and
an operator input unit, wherein
the controller is further configured to:
cause the display screen to display a plurality of options for a face value of the gift certificate when the gift certificate in the captured image is identified as the type accepted at the retail location,
receive a user selection of the face value from the plurality of options;
send a notification to an attendant terminal indicating the gift certificate has been presented for settlement and the face value according to the user selection,
delay settlement processing until a response from the attendant terminal is received confirming authenticity of the gift certificate and the face value.

13. The checkout apparatus according to claim 12, wherein the controller is further configured to complete settlement processing using the face value according to the user selection once the response from the attendant terminal is received confirming authenticity of the gift certificate and the face value.

14. A sales transaction processing method, comprising:
capturing an image of an item being registered in a sales transaction;
identifying the item in the image being registered by comparing the image to stored commodity reference information for a plurality of items for sale at the retail location;
capturing an image of a gift certificate presented for settlement of the sales transaction; and
identifying whether the gift certificate is a type accepted at the retail location for settlement of the sales transaction by comparing the gift certificate in the image to stored gift certificate reference information for a plurality of gift certificate types.

15. The sales transaction processing method according to claim 14, further comprising:
sending notification to an attendant terminal when the gift certificate is identified as the type accepted at the retail location for settlement, the method preferably further comprising:
displaying, on a display screen, a plurality of options for a face value of the gift certificate when the gift certificate is identified as the type accepted at the retail location for settlement, further preferably the method further comprising:
receiving an operator selection of one of the plurality of options for the face value; and
settling the transaction using the face value according to the received operator selection.
